# FASCICULE DE BREVET EUROPEEN

(11) **EP 2 011 705 B1**
(45) Date de publication et mention de la délivrance du brevet: **10.08.2016**
(21) Numéro de dépôt: 08305336.3
(22) Date de dépôt: 26.06.2008
(51) Int. Cl.: B60T 7/08

(54) **Procédé de reglage d'un frein secondaire**
Regulierverfahren für Hilfsbremse
Method of adjusting a secondary brake

(30) Priorité: 02.07.2007 FR 0756205
(43) Date de publication de la demande: 07.01.2009
(73) Titulaire: Peugeot Citroën Automobiles SA, 78140 Vélizy-Villacoublay (FR)
(72) Inventeur: Tassin, Eric, 77290 MITRY MORY (FR); Perrin, Michel, 68390 BALDERSHEIM (FR); Pelle, Bertrand, 93230 ROMAINVILLE (FR); Fesselet, Pascal, 25200 BETHONCOURT (FR); Pauget, Patrick, 25200 MONTBELIARD (FR); Marceau, Philippe, 90380 ROPPE (FR)

(56) Documents cités:
- EP-A- 0 353 876
- EP-A- 1 621 430
- FR-A- 2 731 273
- US-A- 5 910 194

## Description

La présente invention concerne un procédé de réglage d'un frein secondaire, un dispositif de détection mis en oeuvre au cours d'un tel procédé, ainsi qu'un véhicule équipé d'un frein secondaire ainsi réglé.

Sur un véhicule, un frein secondaire, également appelé "frein à main" doit être réglé de manière à satisfaire certaines exigences normalisées. En particulier, le frein secondaire doit permettre de maintenir le véhicule à l'arrêt même lorsque celui-ci se trouve sur une pente. Le frein secondaire est constitué d'éléments émetteurs (levier de frein à main, tirant, palonnier, ...), d'éléments récepteurs (tambours, étriers) généralement disposés au voisinage des roues arrières du véhicule. Les éléments émetteurs et les éléments récepteurs sont reliés entre eux par des moyens de transmission (câbles, gaines, palonnier...). Du fait, en particulier, des tolérances de fabrication et de montage, des jeux de fonctionnement apparaissent le long de cette cinématique

Pour tenir compte de ces tolérances et jeux de fonctionnement, la cinématique du frein secondaire doit être réglée après son montage.

Ce réglage devra garantir un bon fonctionnement du frein secondaire, par exemple, en maintenant la tension des câbles, en évitant le sur-décollement de levier d'étrier ou sabre tambour, en assurant un jeu fonctionnel correct entre le disque et les plaquettes, en assurant un fonctionnement stable au cours du temps.

Différents procédés sont actuellement mis en oeuvre pour régler le frein secondaire.

Par exemple, le document FR-A-2 731 273 divulgue un procédé de mesure et de contrôle d'un frein secondaire. Ce procédé consiste à positionner le véhicule sur une pente, le levier du frein secondaire étant au repos (freins non serrés), ensuite un dispositif de mesure est mis en place et initialisé, puis, l'opérateur relève le levier du frein secondaire d'un nombre prédéterminé de crans (serrage des freins), et lit les données affichées. L'opérateur règle alors la tension du câble avant de retirer le dispositif de mesure.

Un autre procédé consiste en une étape de mise en pression des récepteurs de freinage, en une étape de préréglage, puis en une étape de tassage et enfin en une étape de réglage. L'étape de préréglage consiste à mesurer, pour un angle déterminé du levier de frein, l'effort de tension au niveau du palonnier. La cinématique est alors tendue. L'étape de tassage consiste à solliciter le levier de frein sous un effort constant, par exemple, en effectuant une succession de relèvement du levier de frein afin de stabiliser la cinématique. L'étape de réglage consiste à maintenir le levier de frein à un certain angle et à serrer l'écrou de réglage du palonnier jusqu'à obtenir l'effort, c'est-à-dire la tension dans les câbles, souhaité au niveau du levier de frein.

Ces procédés de l'état de la technique ne sont pas faciles à mettre en oeuvre. Par exemple, pour chaque définition récepteurs arrières est défini une valeur de réglage qui ne tient compte ni de la dispersion des composants et ni de la diversité fournisseur. Ces procédés nécessitent des outils sophistiqués ou des étapes longues (tassage). En outre, d'un véhicule à l'autre le jeu fonctionnel, la compressibilité des gaines et la déformation des récepteurs varient, influant ainsi sur la mesure de tension entre le levier de frein et les récepteurs. De tels procédés, nécessitent également une bonne maîtrise des opérations de mise au jeu fonctionnel, et induisent un manque de souplesse quant au déroulement du processus de montage, les opérations liées à la fonction frein secondaire étant dépendantes des opérations liées au frein principal. Effectivement, il est nécessaire que le circuit de frein soit rempli de liquide pour réaliser la mise au jeu fonctionnel des récepteurs par appuis sur la pédale de frein. Les récepteurs de freins arrière étant sollicités à la fois pour le freinage principal et pour le freinage secondaire. De la même manière, en retouche, les interventions sur le circuit hydraulique ou sur la fonction frein secondaire ne sont pas indépendantes.

Le document FR2731273 décrit un procédé de mesure et de contrôle d'un frein secondaire.

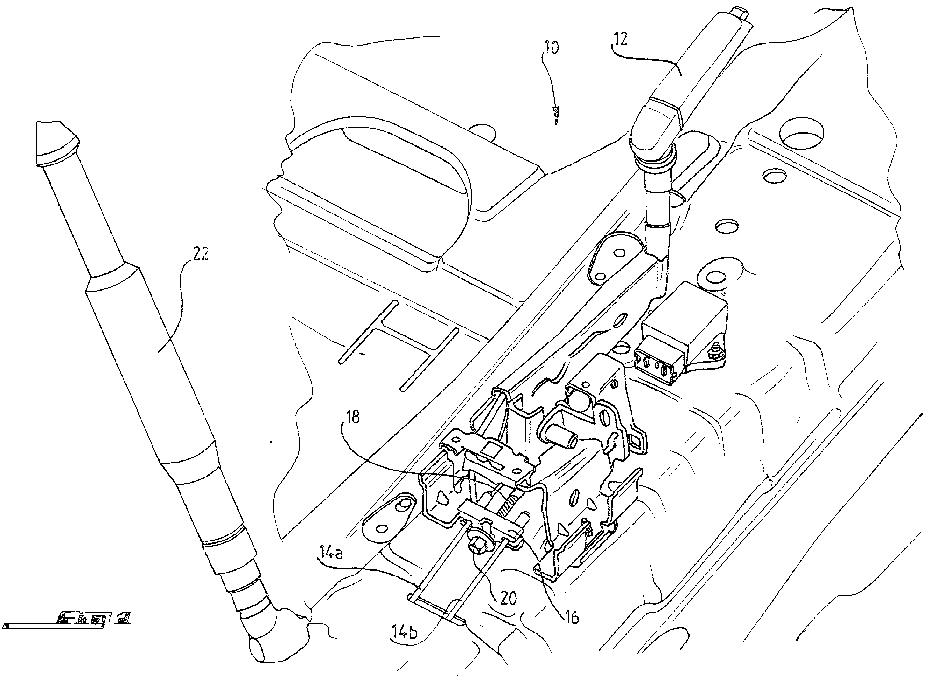

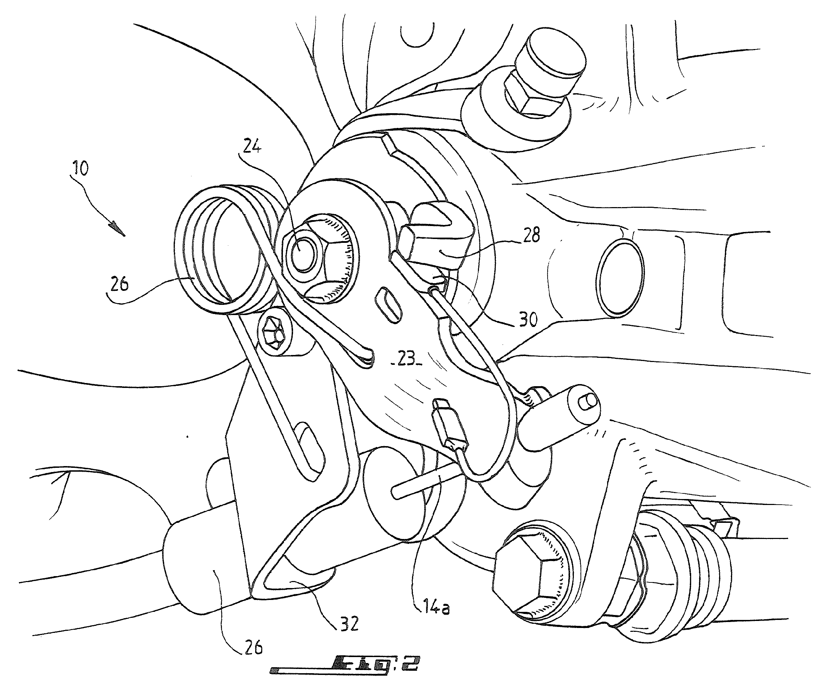

Le document EP1621430 décrit un dispositif de détection (Fig. 2) comprenant des moyens de fixation (28, 30, paragraphe 62) prévus pour fixer ledit dispositif de détection au voisinage du levier d'étrier (1 0, brake caliper operating lever) d'un frein secondaire, un bras de contact (8 in Fig. 1) prévu pour venir en appui contre ledit levier d'étrier (101, un capteur (8, 8') solidaire des moyens de fixation et prévu pour détecter tout déplacement du bras de contact, et un connecteur (40) prévu pour permettre la connexion entre le dispositif de détection (50) et un dispositif de retour d'information à un opérateur.

L'invention a pour but de remédier aux inconvénients mentionnés ci-dessus en proposant un procédé de réglage d'un frein secondaire perfectionné.

A cet effet, la présente invention concerne un procédé de réglage d'un frein secondaire d'un véhicule, ledit frein secondaire comprenant un levier de frein, un écrou de palonnier, et, pour chaque roue, un levier d'étrier mobile, une butée de repos pour le levier d'étrier correspondant, le procédé comprenant:
- une étape de mise en place de cales entre le levier d'étrier et la butée de repos de chaque roue arrière du véhicule,
- une étape de mise en place d'un moyen de maintien de l'un des deux leviers d'étrier de manière à empêcher tout mouvement dudit levier d'étrier
- une étape de serrage de l'écrou de palonnier,
- une étape de détection d'un mouvement du levier d'étrier de ladite autre roue,
- une étape d'arrêt du serrage de l'écrou de palonnier, et
- une étape de retrait du moyen de maintien.

Avantageusement, l'étape de serrage de l'écrou de palonnier est précédée d'une étape de mise en place d'un dispositif de détection au niveau de l'autre roue du véhicule, ledit dispositif de détection étant prévu pour détecter tout mouvement du levier d'étrier de ladite autre roue.

Avantageusement, l'étape de mise en place du dispositif de détection consiste en une aimantation dudit dispositif de détection sur le disque de freinage de ladite autre roue.

Avantageusement, l'étape de mise en place du dispositif de détection s'accompagne d'une étape d'indexation de la position du dispositif de détection par rapport au moyeu de ladite autre roue.

L'invention concerne également un dispositif de détection mis en oeuvre par le procédé de réglage décrit ci-dessus, comprenant:
- des moyens de fixation prévus pour fixer ledit dispositif de détection au voisinage du levier d'étrier d'un frein secondaire,
- un capteur (38) solidaire des moyens de fixation comprenant un bras de contact prévu pour venir en appui contre ledit levier d'étrier ; ledit bras de contact (42) étant apte à basculer pour activer le capteur lorsque le levier d'étrier bascule selon un mouvement de rotation autour de son axe de rotation ,et
- un connecteur prévu pour permettre la connexion entre le dispositif de détection et un dispositif de retour d'information à un opérateur.

Avantageusement, le capteur est du type "tout ou rien".

Avantageusement, les moyens de fixation sont aimantés.

Avantageusement, le dispositif de retour d'information est un outil de vissage prévu pour visser l'écrou de palonnier du frein secondaire.

L'invention sera mieux comprise, et d'autres buts, caractéristiques, détails et avantages de celle-ci apparaîtront plus clairement au cours de la description explicative qui va suivre, faite en référence aux dessins schématiques annexés, donnés uniquement à titre d'exemple illustrant un mode de réalisation de l'invention et dans lesquels :
- la figure 1 représente une vue en perspective des éléments d'un frein secondaire qui sont situés dans l'habitacle d'un véhicule,
- la figure 2 représente une vue en perspective des éléments du frein secondaire qui sont situés au niveau des éléments récepteurs de l'une des roues,
- la figure 3 représente une vue en perspective des éléments du frein secondaire qui sont situés au niveau des éléments récepteurs de l'autre roue, et
- la figure 4 est une vue des éléments de la figure 3 vus selon une direction opposée.

La figure 1 représente les éléments d'un frein secondaire 10 qui sont disposés dans l'habitacle du véhicule. Un levier de frein 12, généralement monté mobile en rotation autour d'un axe perpendiculaire à l'axe longitudinal du véhicule, est actionnable par un opérateur. Le levier de frein 12 est solidaire d'un tirant 18 qui prend généralement la forme d'une tige filetée dont une première extrémité est fixée sur le levier de frein 12 et dont une deuxième extrémité reçoit un palonnier 16. Le palonnier 16 comprend un trou par lequel le tirant 18 traverse le palonnier 16. Le palonnier 16 est emmanché sur la deuxième extrémité du tirant 18 et un écrou 20 est vissé sur le tirant 18 pour maintenir et ajuster le palonnier 20 sur le tirant 18. Sur le palonnier 16 sont fixés un premier câble 14a prévu pour actionner les éléments récepteurs situés sur la roue arrière gauche, et un deuxième câble 14b prévu pour actionner les éléments récepteurs situés sur la roue arrière droite. Chaque câble 14a, 14b prend généralement la forme d'un câble de type « Bowden cable » dont chaque extrémité est munie d'un grain qui permet de fixer l'extrémité correspondante sur la pièce adéquate. Chaque câble 14a, 14b se compose d'un câble souple coulissant dans une gaine souple. L'écrou de palonnier 20 peut être vissé grâce à un outil 22, par exemple, une visseuse pneumatique asservie.

La figure 2 représente les éléments du frein secondaire 10 qui sont disposés au niveau des roues du véhicule (ici la roue arrière droite (sens véhicule)). Un levier d'étrier mobile 23 qui commande l'actionnement de l'étrier est monté mobile en rotation sur un arbre 24. L'actionnement du levier d'étrier 23 est lui-même commandé par le câble 14a dont l'un des grains est monté en appui contre ledit levier d'étrier 23. Chaque extrémité de la gaine souple 26 du câble 14a est fixée sur une platine (seule la platine référencée 32 est visible) fixe du châssis du véhicule. Le frein secondaire comprend également une butée de repos 28 pour le levier d'étrier 23. La butée de repos 28 correspond à la position au repos du levier d'étrier 23. En d'autres termes, lorsque le levier d'étrier 23 n'est soumis à aucune traction de la part du câble 14a, il est en appui contre ladite butée de repos 28. A cet effet, un ressort de torsion 26 dont l'une des extrémités est fixée sur la platine fixe 32 et dont l'autre extrémité est fixée sur le levier d'étrier 23 vient contraindre ce dernier en appui contre la butée de repos 28. Le procédé de réglage, qui est décrit ultérieurement, nécessite la mise en place d'une cale 30 entre le levier d'étrier 23 et la butée de repos 28. Le maintien en position de la cale 30 lors du déroulement du procédé de réglage est assuré par le ressort 26 qui contraint le levier d'étrier 23 en position. Les dimensions de la cale 30, notamment son épaisseur, sont spécifiques à chaque véhicule, car ces dimensions doivent prendre en compte l'allongement des câbles 14a et 14b, l'écrasement des gaines 26 et assure la stabilisation des composants due aux différentes sollicitations en clientèle. Le levier d'étrier 23 est bloqué en rotation par un moyen de maintien du type collier plastique qui enserre le levier et la butée de repos 28 et assure ainsi que lors du procédé de réglage le levier d'étrier 23 ne peut pas se déplacer.

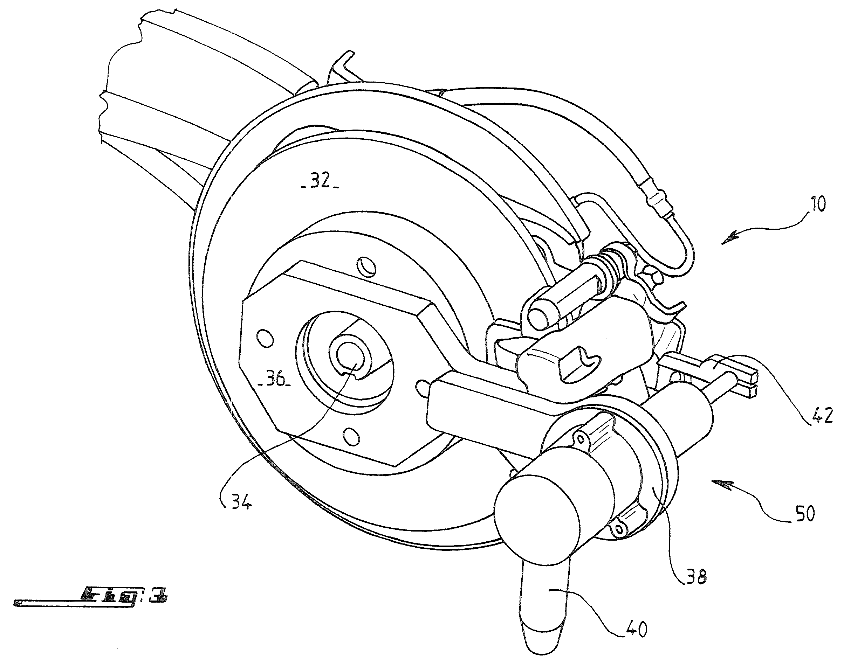

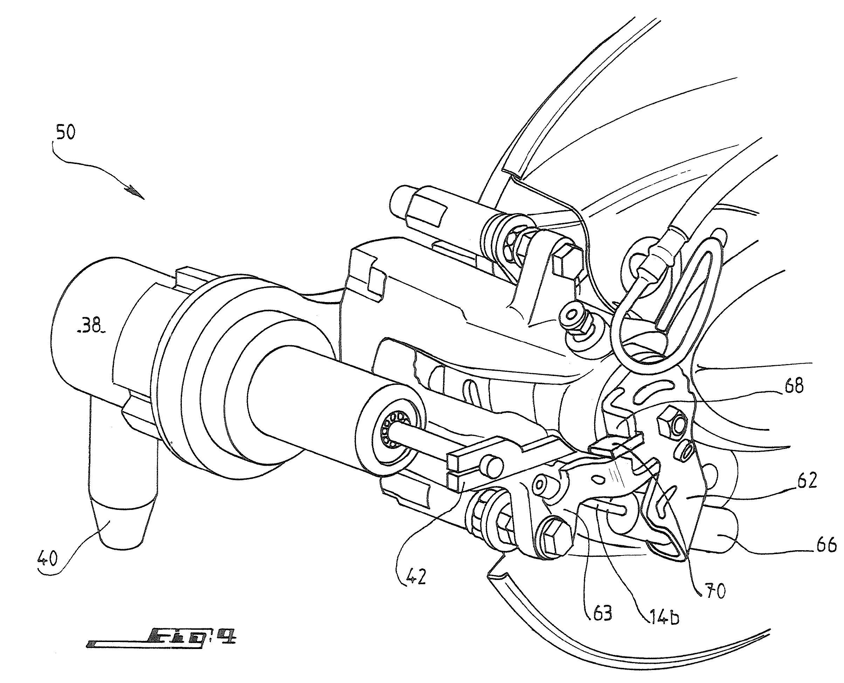

La figure 3 et la figure 4 représentent les éléments du frein secondaire 10 qui sont disposés au niveau de l'autre roue du véhicule par rapport à celle de la figure 2 (ici la roue arrière gauche (sens véhicule)). Comme précédemment, le frein secondaire 10 comprend un levier d'étrier 63 qui commande l'actionnement de l'étrier. L'actionnement du levier d'étrier 63 est commandé par le câble 14b. Chaque extrémité de la gaine souple 66 du câble 14b est fixée sur une platine (seule la platine référencée 62 est visible) fixe du châssis du véhicule. Le frein secondaire comprend également une butée de repos 68. Le levier d'étrier 63 vient commander l'étrier de frein qui agit alors sur un disque de freinage 32 qui est monté sur le moyeu de la roue 34. Une cale 70 est également disposée entre le levier d'étrier 63 et la butée de repos 68.

Afin de pouvoir facilement mettre en oeuvre le procédé de réglage décrit ci-après, un dispositif de détection 50 est positionné au niveau de ladite autre roue du véhicule. Le dispositif de détection 50 comprend des moyens de fixation 36, un capteur 38, un connecteur 40 et un bras de contact 42.

Les moyens de fixation 36 permettent la fixation du dispositif de détection 50 au voisinage du levier d'étrier 63 (figure 4). Dans le mode de réalisation de l'invention représenté sur les figures, les moyens de fixation 36 prennent la forme d'une semelle qui comporte au moins une partie aimantée destinée à venir se fixer sur le disque 32 par aimantation. La position de la semelle 36 est alors, de préférence, indexée sur la position du moyeu 34.

Le capteur 38 est fixé aux moyens de fixation 36 et est, de préférence, un capteur du type "tout ou rien". Comme cela est expliqué ci-après, le capteur 38 va détecter le déplacement du bras de contact 42 et répercuter cette information à l'opérateur effectuant le réglage du frein secondaire. A cette fin, le connecteur 40 permet de relier le capteur 38 à un afficheur, ou à tout autre dispositif de retour d'information permettant d'informer l'opérateur de la détection du mouvement du bras de contact 42. En particulier, il est avantageux que le capteur 38 soit relié à l'outil 22 vissant l'écrou de palonnier 20, ainsi la détection du mouvement du bras de contact 42 entraîne automatiquement l'arrêt de l'outil 22. L'outil 22 constitue alors le dispositif de retour d'information.

Le bras de contact 42 est monté sur le capteur 38 et vient reposer sur le levier d'étrier 63. Ainsi, lorsque le levier d'étrier 63 se déplace sous l'action du serrage de l'écrou de palonnier 20, le bras de contact 42 bascule et active le capteur 38. Dans le mode de réalisation de l'invention représenté sur la figure 4, le mouvement du levier d'étrier 63 est un mouvement vers le bas (rotation anti-horaire autour de son axe de rotation).

Le procédé de réglage du frein secondaire 10 du véhicule comprend:
- une étape de mise en place d'une cale 30, 70 entre le levier d'étrier 23, 63 et la butée de repos 28, 68 de chaque roue arrière du véhicule,
- une étape de mise en place d'un moyen de maintien, par exemple du type collier plastique, de l'un des deux leviers d'étrier 23 de manière à empêcher tout mouvement dudit levier d'étrier 23,
- une étape de serrage de l'écrou de palonnier (20),
- une étape de détection d'un mouvement du levier d'étrier (63) de ladite autre roue,
- une étape d'arrêt du serrage de l'écrou de palonnier 20, et
- une étape de retrait du moyen de maintien.

L'étape de détection peut être réalisée par un opérateur disposé près dudit levier d'étrier 63, mais afin d'automatiser le procédé de réglage, il est préférable d'utiliser un dispositif de détection tel que celui qui a été précédemment décrit. L'étape de serrage de l'écrou de palonnier 20 est alors précédée d'une étape de mise en place du dispositif de détection 50 au niveau de l'autre roue du véhicule, ledit dispositif de détection 50 étant prévu pour détecter tout mouvement du levier d'étrier 63 de ladite autre roue au cours de l'étape de détection.

Il n'est pas nécessaire d'effectuer le réglage en inversant la position de la cale 30 et du dispositif de détection 50, car le palonnier 16 comporte une fonction rotule qui permet d'équilibrer les efforts dans chaque câble 14a, 14b.

Ce procédé permet un réglage du frein secondaire 10 rapide et facile à mettre en oeuvre. En particulier, il n'est plus nécessaire de réaliser une étape de tassage. Il n'est plus nécessaire de réaliser des mesures d'effort, puisque il est uniquement nécessaire de détecter un mouvement en "tout ou rien". Ce procédé de réglage est indépendant des dispersions ou des diversités des produits, le réglage devient spécifique à chaque véhicule. Ce procédé permet également des gains en investissement et il est également plus robuste.

## Revendications

1. Procédé de réglage d'un frein secondaire (10) d'un véhicule, ledit frein secondaire (10) comprenant un levier de frein (12), un écrou de palonnier (20), et, pour chaque roue, un levier d'étrier mobile (23, 63), une butée de repos (28, 68) pour le levier d'étrier (23, 63) correspondant, le procédé comprenant:
- une étape de mise en place de cales (30, 70) entre le levier d'étrier (23, 63) et la butée de repos (28, 68) de chaque roue arrière du véhicule,
- une étape de mise en place d'un moyen de maintien de l'un des deux leviers d'étrier (23) de manière à empêcher tout mouvement dudit levier d'étrier (23),
- une étape de serrage de l'écrou de palonnier (20),
- une étape de détection d'un mouvement du levier d'étrier (63) de ladite autre roue,
- une étape d'arrêt du serrage de l'écrou de palonnier (20), et
- une étape de retrait du moyen de maintien.

2. Procédé de réglage selon la revendication 1, **caractérisé en ce que** l'étape de serrage de l'écrou de palonnier (20) est précédée d'une étape de mise en place d'un dispositif de détection (50) au niveau de l'autre roue du véhicule, ledit dispositif de détection (50) étant prévu pour détecter tout mouvement du levier d'étrier (63) de ladite autre roue.

3. Procédé de réglage selon la revendication 2, **caractérisé en ce que** l'étape de mise en place du dispositif de détection (50) consiste en une aimantation dudit dispositif de détection (50) sur le disque de freinage (32) de ladite autre roue.

4. Procédé de réglage selon l'une des revendications 2 ou 3, **caractérisé en ce que** l'étape de mise en place du dispositif de détection (50) s'accompagne d'une étape d'indexation de la position du dispositif de détection (50) par rapport au moyeu de ladite autre roue.

5. Dispositif de détection (50) mis en oeuvre par le procédé selon l'une des revendications 2 à 4, comprenant:
- des moyens de fixation (36) prévus pour fixer ledit dispositif de détection (50) au voisinage du levier d'étrier (63) d'un frein secondaire (10),
- un capteur (38) solidaire des moyens de fixation (36) comprenant un bras de contact (42) prévu pour venir en appui contre ledit levier d'étrier (63) ; ledit bras de contact (42) étant apte à basculer pour activer le capteur (38)lorsque le levier d'étrier (63) bascule selon un mouvement de rotation autour de son axe de rotation, et
- un connecteur (40) prévu pour permettre la connexion entre le dispositif de détection (50) et un dispositif de retour d'information à un opérateur.

6. Dispositif de détection (50) selon la revendication 5, **caractérisé en ce que** le capteur (38) est du type "tout ou rien".

7. Dispositif de détection (50) selon l'une des revendications 5 ou 6, **caractérisé en ce que** les moyens de fixation (36) sont aimantés.

8. Dispositif de détection (50) selon l'une des revendications 5 à 7, **caractérisé en ce que** le dispositif de retour d'information est un outil de vissage (22) prévu pour visser l'écrou de palonnier (20) du frein secondaire (10).

## Patentansprüche

1. Verfahren zum Regulieren einer Hilfsbremse (10) eines Fahrzeugs, wobei die Hilfsbremse (10) einen Bremshebel (12), eine Schwinghebelmutter (20) und für jedes Rad einen beweglichen Bügelhebel (23, 63), einen Ruheanschlag (28, 68) für den entsprechenden Bügelhebel (23, 63) umfasst, wobei das Verfahren Folgendes umfasst:
- einen Schritt des Anbringens von Keilen (30, 70) zwischen dem Bügelhebel (23, 63) und dem Ruheanschlag (28, 68) jedes Hinterrads des Fahrzeugs,
- einen Schritt des Anbringens eines Mittels zum Halten eines der zwei Bügelhebel (23) derart, dass jede Bewegung des Bügelhebels (23) verhindert wird,
- einen Schritt des Festziehens der Mutter des Schwinghebels (20),
- einen Schritt des Erfassens einer Bewegung des Bügelhebels (63) des anderen Rads,
- einen Schritt des Stoppens des Festziehens der Mutter des Schwinghebels (20), und
- einen Rückziehschritt des Haltemittels.

2. Verfahren zum Regulieren nach Anspruch 1, **dadurch gekennzeichnet, dass** dem Schritt des Festziehens der Schwinghebelmutter (20) ein Schritt des Anbringens einer Erfassungsvorrichtung (50) im Bereich des anderen Rads des Fahrzeugs vorausgeht, wobei die Erfassungsvorrichtung (50) vorgesehen ist, um jede Bewegung des Bügelhebels (63) des anderen Rads zu erfassen.

3. Verfahren zum Regulieren nach Anspruch 2, **dadurch gekennzeichnet, dass** der Schritt des Anbringens der Erfassungsvorrichtung (50) in einer Magnetisierung der Erfassungsvorrichtung (50) auf der Bremsscheibe (32) des anderen Rads besteht.

4. Verfahren zum Regulieren nach Anspruch 2 oder 3, **dadurch gekennzeichnet, dass** der Schritt des Anbringens der Erfassungsvorrichtung (50) von einem Positionierungsschritt der Position der Erfassungsvorrichtung (50) in Bezug zu der Nabe des anderen Rads begleitet ist.

5. Erfassungsvorrichtung (50), die von dem Verfahren nach einem der Ansprüche 2 bis 4 umgesetzt wird, die Folgendes umfasst:
- Befestigungsmittel (36), die vorgesehen sind, um die Erfassungsvorrichtung (50) in der Nähe des Bügelhebels (63) einer Hilfsbremse (10) zu befestigen,
- einen Sensor (38), der fest mit den Befestigungsmitteln (36) verbunden ist, der einen Kontaktarm (42) umfasst, der vorgesehen ist, um gegen den Hebel (63) zum Aufliegen zu kommen, wobei der Kontaktarm (42) geeignet ist zu kippen, um den Sensor (38) zu aktivieren, wenn der Bügelhebel (63) gemäß einer Drehbewegung um seine Rotationsachse kippt, und
- einen Steckverbinder (40), der vorgesehen ist, um die Verbindung zwischen der Erfassungsvorrichtung (50) und einer Vorrichtung zur Rückleitung von Informationen zu einem Bediener zu erlauben.

6. Erfassungsvorrichtung (50) nach Anspruch 5, **dadurch gekennzeichnet, dass** der Sensor (38) des digitalen Typs ist.

7. Erfassungsvorrichtung (50) nach einem der Ansprüche 5 oder 6, **dadurch gekennzeichnet, dass** die Befestigungsmittel (36) magnetisch sind.

8. Erfassungsvorrichtung (50) nach einem der Ansprüche 5 bis 7, **dadurch gekennzeichnet, dass** die Vorrichtung zur Rückleitung von Informationen ein Schraubwerkzeug (22) ist, das vorgesehen ist, um die Schwinghebelmutter (20) der Hilfsbremse (10) zu schrauben.

## Claims

1. A method of adjusting a secondary brake (10) of a vehicle, said secondary brake (10) including a brake lever (12), a spreader nut (20), and, for each wheel, a movable yoke lever (23, 63), a rest stop (28, 68) for the corresponding yoke lever (23, 63), the method including:
- a step of putting shims (30, 70) in place between the yoke lever (23, 63) and the rest stop (28, 68) of each rear wheel of the vehicle,
- a step of putting in place a holding means of one of the two yoke levers (23) so as to prevent any movement of said yoke lever (23),
- a step of tightening of the spreader nut (20),
- a step of detection of a movement of the yoke lever (63) of said other wheel,
- a step of stopping the tightening of the spreader nut (20), and
- a step of withdrawal of the holding means.

2. The method of adjusting according to Claim 1, **characterized in that** the step of tightening the spreader nut (20) is preceded by a step of putting in place a detection device (50) at the level of the other vehicle wheel, said detection device (50) being provided for detecting any movement of the yoke lever (63) of said other wheel.

3. The method of adjusting according to Claim 2, **characterized in that** the step of putting in place the detection device (50) consists in a magnetization of said detection device (50) on the brake disc (32) of said other wheel.

4. The method of adjusting according to one of Claims 2 or 3, **characterized in that** the step of putting in place the detection device (50) is accompanied by a step of indexing of the position of the detection device (50) with respect to the hub of said other wheel.

5. A detection device (50) implemented by the method according to one of Claims 2 to 4, including:
- fixing means (36) provided for fixing said detection device (50) in the vicinity of the yoke lever (63) of a secondary brake (10),
- a sensor (38) integral with the fixing means (36) including a contact arm (42) provided to come to rest against said yoke lever (63); said contact arm (42) being able to rock to activate the sensor (38) when the yoke lever (63) rocks along a rotation movement about its rotation axis, and
- a connector (40) provided to permit the connection between the detection device (50) and a device for return of information to an operator.

6. The detection device (50) according to Claim 5, **characterized in that** the sensor (38) is of the "all or nothing" type.

7. The detection device (50) according to one of Claims 5 or 6, **characterized in that** the fixing means (36) are magnetized.

8. The detection device (50) according to one of Claims 5 to 7, **characterized in that** the device for return of information is a screwing device (22) provided to screw the spreader nut (20) of the secondary brake (10).
